# EUROPEAN PATENT APPLICATION

(11) **EP 4 679 931 A1**
(43) Date of publication of application: **14.01.2026**
(21) Application number: 25186713.1
(22) Date of filing: 01.07.2025
(51) Int. Cl.: H04W 76/15, H04W 84/12, H04L 69/14, H04W 36/08, H04W 36/28, H04L 69/24, H04W 28/086, H04W 40/36, H04L 45/24

(54) **COMMUNICATION APPARATUS, CONTROL METHOD, AND PROGRAM**

(30) Priority: 11.07.2024 JP 2024112049
(71) Applicant: CANON KABUSHIKI KAISHA, Tokyo 146-8501 (JP)
(72) Inventor: KAWAKAMI, Daisuke, Tokyo, 146-8501 (JP)
(74) Representative: Canon Europe Limited

(57) **Abstract**

A communication apparatus (AP 101, AP 105, STA 102) conforming to Institute of Electrical and Electronics Engineers (IEEE) 802.11 series standards establishes multiple links at least including a first link and a second link with a first other communication apparatus, performs a process to acquire information about other peripheral communication apparatuses based on disconnection of any one link, among the multiple links established with the first other communication apparatus, and performs control so as to perform roaming to a second other communication apparatus based on the acquired information.

## Description

### TECHNICAL FIELD

The disclosure relates to a wireless communication apparatus, a method, and a program accommodating improvement in communication efficiency of a wireless local area network (LAN) apparatus capable of concurrently using multiple links in a wireless LAN conforming to Institute of Electrical and Electronics Engineers (IEEE) 802.11.

### BACKGROUND

Development of communication technologies, such as the wireless LAN, is advanced with increase in the amount of communication data in recent years. IEEE 802.11 series standards are known as main communication standards for the wireless LAN. The IEEE 802.11 series standards include, for example, IEEE 802.11a/b/g/n/ac/ax standards. For example, in the latest IEEE 802.11ax, a technology to increase a communication speed in a congestion situation, in addition to achievement of high peak throughput up to 9.6 gigabits per second (Gbps), is standardized using orthogonal frequency-division multiple access (OFDMA).

In order to develop a subsequent standard intended to further increase the throughput and to improve frequency usage efficiency and communication latency, a new task group for developing IEEE 802.11be standard is set up in an IEEE 802.11 working group. In this task group, multi-link communication is considered as one of new functions specified in the IEEE 802.11be standard. In the multi-link communication, a communication apparatus called a multi-link device (MLD) causes multiple communication interfaces to be cooperated with each other to concurrently use multiple links.

A station (STA) in related art which operates with a single link is capable of searching for another access point (AP) for connection, for example, if the received signal strength indicator (RSSI) from the AP to which the STA is currently connected is decreased to a value lower than a predetermined threshold value. A technology to move around the multiple Aps is referred to as roaming. In the STA in the related art which operates with a single link described above, the roaming is started based on the decrease in the received signal strength indicator from the AP to which the SAT is currently connected.

For example, Japanese Patent Laid-Open No. 2023-107741 describes a roaming technique performed by a communication apparatus, which is the STA capable of establishing the multi-link. Seamless roaming is disclosed in this technique, in which the link with the roaming target AP is concurrently kept while keeping the link with the roaming source AP.

However, in the MLD capable of multi-link, when the roaming is performed according to the standard in the related art, the communication efficiency may be decreased due to decrease in the throughput and increase in the amount of calculation required to calculate the comparison value concerning the roaming standard.

### SUMMARY

According to an aspect of the present disclosure, there is provided a mechanism for realizing efficient roaming in the MLD.

The present disclosure in its first aspect provides a communication apparatus as specified in claim 1. Optional features are specified in claims 2 to 13.

The present disclosure in its second aspect provides a control method of a communication apparatus as specified in claim 14.

The present disclosure in its third aspect provides a computer program as specified in claim 15.

In order to resolve the above problem, a communication apparatus according to an aspect of the disclosure conforms to Institute of Electrical and Electronics Engineers (IEEE) 802.11 series standards. The communication apparatus includes an establishment unit configured to establish multiple links at least including a first link and a second link with a first other communication apparatus; an acquisition unit configured to perform a process to acquire information about other peripheral communication apparatuses based on disconnection of any one link, among the multiple links established with the first other communication apparatus; and a control unit configured to perform control so as to perform roaming to a second other communication apparatus based on the information acquired by the acquisition unit.

Features of the present disclosure will become apparent from the following description of embodiments with reference to the attached drawings. The following description of embodiments are described by way of example.

### BRIEF DESCRIPTION OF THE DRAWINGS

Fig. 1 illustrates an example of the configuration of a wireless communication system.
Fig. 2 illustrates an example of a sequence between an AP and an STA in establishment of multi-link.
Fig. 3 illustrates an example of the configuration of a Reduced Neighbor Report element.
Fig. 4 illustrates an example of the hardware configuration of a communication apparatus.
Fig. 5 is a block diagram illustrating an example of the functional configuration of the communication apparatus.
Fig. 6 is a flowchart illustrating an example of a process to perform roaming to another AP if any link in the multi-link is disconnected, which is performed by the STA.
Fig. 7 is a flowchart illustrating an example of a process to determine whether the roaming is performed based on communication quality information if any link in the multi-link is disconnected, which is performed by the STA.
Fig. 8 is a flowchart illustrating an example of a process to determine whether the roaming is performed based on settings in the STA if any link in the multi-link is disconnected, which is performed by the STA.
Fig. 9 is a flowchart illustrating an example of a process to determine whether the roaming is performed based on the number of connectable links and the communication quality information, which is performed by the STA.

### DESCRIPTION OF THE EMBODIMENTS

Embodiments will herein be described in detail with reference to the drawings. The embodiments described below do not limit the disclosure according to the scope of the claims. Although multiple features are described in the embodiments, all the features are not necessarily essential for the disclosure and the multiple features may be arbitrarily combined. The same reference numerals are used in the accompanying drawings to identify the same components or similar components and a duplicated description of such components is omitted herein. Each of the embodiments of the present invention described below can be implemented solely or as a combination of a plurality of the embodiments or features thereof where necessary or where the combination of elements or features from individual embodiments in a single embodiment is beneficial.

### System configuration

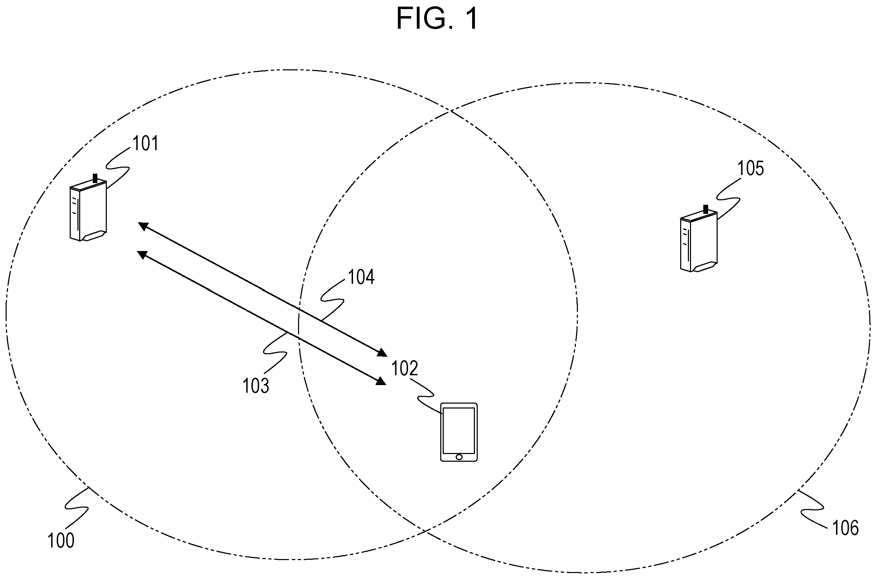

Fig. 1 illustrates an example of the configuration of a wireless communication system according to an embodiment. The wireless communication system includes, for example, two access points (Aps) 101 and 105 and one station (STA) 102. The respective communication apparatuses (the APs 101 and 105 and the STA 102) are wireless communication apparatuses capable of wireless communication conforming to the IEEE 802.11 series standards including the IEEE 802.11be standard. The IEEE 802.11be standard may also be called an Extremely High Throughput (EHT) standard.

The IEEE 802.11 series standards may include the IEEE 802.11a/b/g/n/ac/ax standards. These standards may be called legacy standards. In other words, each communication apparatus may support one or more legacy standards, in addition to the IEEE 802.11be standard. A network 100 formed by the AP 101 indicates a range in which the AP 101 is capable of communicating with the STA 102. Specifically, in the range of the network 100, the STA 102 is capable of receiving a signal transmitted from the AP 101 and a signal transmitted from the STA 102 is capable of being received by the AP 101. Similarly, a network 106 formed by the AP 105 indicates a range in which the AP 105 is capable of communicating with the STA 102. Each communication apparatus may support other communication standards, such as Bluetooth (registered trademark), Near Field Communication (NFC), Ultra Wide Band (UWB), ZigBee, and Multi Band Orthogonal Frequency Division Multiplexing (OFDM) Alliance (MBOA), in addition to the IEEE 802.11 series standards. The UWB includes wireless UWB, wireless 1394, WiNET, and so on. Each communication apparatus may support communication standards for wired communication, such as a wired LAN.

Although a state is illustrated in Fig. 1, in which the two APs 101 and 105 and the one STA 102 exist, the numbers of the APs and STAs are not limited to these. Although the AP 101 and the AP 105 may be wireless LAN routers or personal computers (PCs), the AP 101 and the AP 105 are not limited to these ones. Although the STA 102 may be an arbitrary electronic device, such as a smartphone, a tablet, a cellular phone, a PC, a video camera, a headset, a printer, or a display, the STA 102 is not limited to these ones. Each communication apparatus may be an information processing apparatus, such as a wireless chip, capable of performing the wireless communication conforming to the IEEE 802.11be standard.

One of new functions developed in the IEEE 802.11be standard is multi-link communication. In the IEEE 802.11 series standards in the related art, the STA 102 establishes a single link with the AP 101 for data communication. In the multi-link communication, the STA 102 is capable of concurrently performing the data communication with the AP 101 using two or more links to realize increase in throughput. Support of a 6-GHz band is considered in the IEEE 802.11be standard in order to widen the frequency band available in the communication apparatus.

Specifically, in the IEEE 802.11 series standards, use of frequency bands including a 2.4-GHz band, a 5-GHz band, the 6-GHz band, and a 60-GHz band is specified for the multi-link communication. Multiple frequency channels are defined in each frequency band. For example, a channel using a 20-MHz band width is defined as the frequency channel used for one wireless link. In the IEEE 802.11 series standards, bonding of an adjacent channel enables a band width wider than or equal to 40 MHz to be used for one frequency channel. As an example, the AP 101 is capable of establishing a first link with the STA 102 using a first frequency channel of the 5-GHz band for communication. The STA 102 is capable of establishing a second link with the AP 101 using a second frequency channel of the 6-GHz band for communication. In this case, the AP 101 and the STA 102 are capable of concurrently performing the multi-link communication using the second link while keeping the first link. As described above, in the present embodiment, the AP 101 and the STA 102 are capable of performing the multi-link communication using the multiple links in the network 100.

An example is illustrated in Fig. 1, in which two wireless links (links 103 and 104) are established between the AP 101 and the STA 102. As described above, the respective wireless links may use different frequency bands. For example, the AP 101 and the STA 102 are capable of concurrently establishing the link 103 using the 5-GHz band and the link 104 using the 6-GHz band. The multiple wireless links may be composed of multiple different frequency channels belonging to the same frequency band. For example, the multi-link may be composed of two links: a link using 15ch in the 6-GHz band and a link using 207ch in the 6-GHz band.

In the present embodiment, ch (the wireless channel or the channel) is identification information used for identification of a specific frequency channel.

In addition, the AP 101 and the STA 102 may concurrently establish three or more wireless links. For example, when three or more wireless links are concurrently established, the multiple links belonging to the same frequency band may coexist with the links belonging to a frequency band different from that of the multiple links. The link of 36ch in the 5-GHz band, the link of 149ch in the 5-GHz band, and the link of 15ch in the 6-GHz band may compose the multi-link. Establishing the multiple links using different frequency channels between the AP 101 and the STA 102 enables the communication with the link using another frequency channel to be performed even if any frequency channel is crowded. Accordingly, it is possible to avoid decrease in the throughput and increase in delay.

The communication apparatus capable of the multi-link communication is called a multi-link device (MLD). The communication apparatus that operates as the AP or the STA conforming to the IEEE 802.11be standard and that has a function to operate as the MLD is called an AP MLD or an STA MLD, respectively. The STA MLD may be called a non-AP MLD. In the AP MLD or the STA MLD, a communication interface (I/F) composing each link may be called an Affiliated AP (A-AP) or an Affiliated STA (A-STA). The Affiliated STA may be called an Affiliated non-AP STA. The A-APs are associated with the AP MLD and operate on different frequency channels. The A-STAs are associated with the STA MLD and operate on different frequency channels. A state in which the A-AP and the A-STA are associated with the AP MLD and the STA MLD, respectively, may be referred to as belonging to the MLD. Although the case is described in the following embodiments, in which the multi-link communication using the IEEE 802.11be standard is performed, the multi-link communication is not limited to this. For example, the following description is applicable to the multi-link communication conforming to another wireless communication standard and the multi-link communication using multiple wired links.

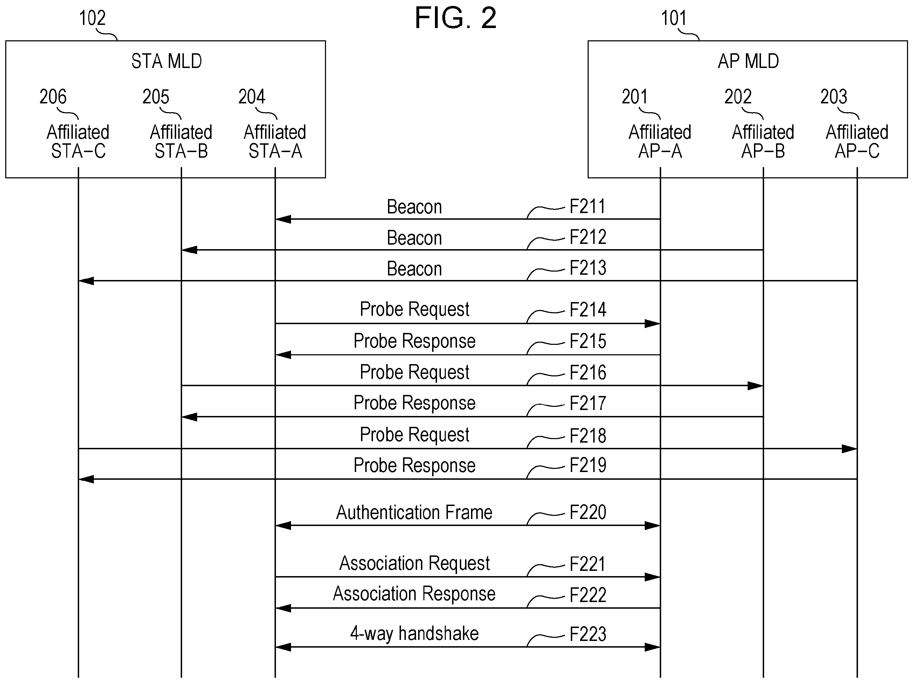

Fig. 2 illustrates an example of a sequence in establishment of the multi-link between the AP 101 and the STA 102. The AP 101, which is the AP MLD, has Affiliated AP (A-AP)-A 201 to A-AP-C 203 serving as wireless I/Fs operating on the frequency channels corresponding to the respective links. The STA 102, which is the STA MLD, has Affiliated STA (A-STA)-A 204 to A-STA-C 206 serving as wireless I/Fs operating on the frequency channels corresponding to the respective links. Information necessary to establish the multi-link communication between the AP 101 and the STA 102 may be indicated to the AP 101 and the STA 102 with a Basic Multi-Link element. For example, the AP MLD transmits Beacons or Probe Responses each including the Basic Multi-Link element via the A-AP-A 201 to the A-AP-C 203 (F211 to F213, F215, F217, and F219). The Probe Responses may be transmitted in response to Probe Requests transmitted from the STA 102 (F214 to F219). The STA MLD indicates the Basic Multi-Link element to the AP using an Association Request transmitted via the A-STA, which is described below. The STA 102 receives the Beacons or the Probe Responses via the A-STA-A 204 to the A-STA-C 206. The STA 102 may confirm whether the Basic Multi-Link element is included in the received Beacons or Probe Responses to detect whether the AP 101 is the AP MLD. When the STA 102 has detected that the AP 101 is the AP MLD, the STA 102 acquires information about each A-AP belonging to the AP MLD from a Reduced Neighbor Report (RNR) element included in the received Beacon or Probe Response. The RNR element may include information about the APs around the A-AP transmitting the RNR element, in addition to the information about each A-AP belonging to the same AP MLD. For example, the RNR element may include the frequency band, channel information, and so on used by each A-AP belonging to the same AP MLD and the peripheral APs. The fact that the AP reported by the RNR element is each A-AP belonging to the same AP MLD may be indicated by the value of an MLD identifier (ID) associated with the AP, which is zero. The STA 102 may establish the multi-link with the AP 101 using any of A-STAs. For example, the STA 102 may perform a process to establish the multi-link with the A-AP-A 201 via the A-STA-A 204. As the process to establish the multi-link, exchange of an Authentication Frame, the Association Request, and an Association Response with the AP 101 may be performed (F220 to F222). For example, the STA 102 may transmit the Association Request including the Basic Multi-Link element to request the establishment of the multi-link of the AP 101 (F221). As an example, the STA MLD determines the frequency channel on which each A-STA operates based on the information about each A-Ap acquired with the RNR element. The STA MLD indicates the information about the frequency channel on which each A-STA operates and so on to the AP MLD using the Basic Multi-Link element. The AP MLD acquires the information about the frequency channel on which each A-STA operates and so on from the received Basic Multi-Link element. The AP MLD may return the Association Response to establish the multi-link between the AP 101 and the STA 102 (F222). The STA MLD switches the frequency channel on which each A-STA operates to the determined frequency channel. In the above manner, it is possible to collectively establish the multiple links between the respective A-APs and the respective A-STAs without individual performance of the process to establish the link with each link. The AP 101 and the STA 102 may exchange security information and so on using a 4-way handshake step after establishing the multi-link (F223). When the AP 101 is not the AP MLD, the STA 102 may establish the connection using a single frequency channel. The method using the Basic Multi-Link element and the RNR element is an example of the method of exchanging the information about the multi-link between the AP 101 and the STA 102 and another method may be used.

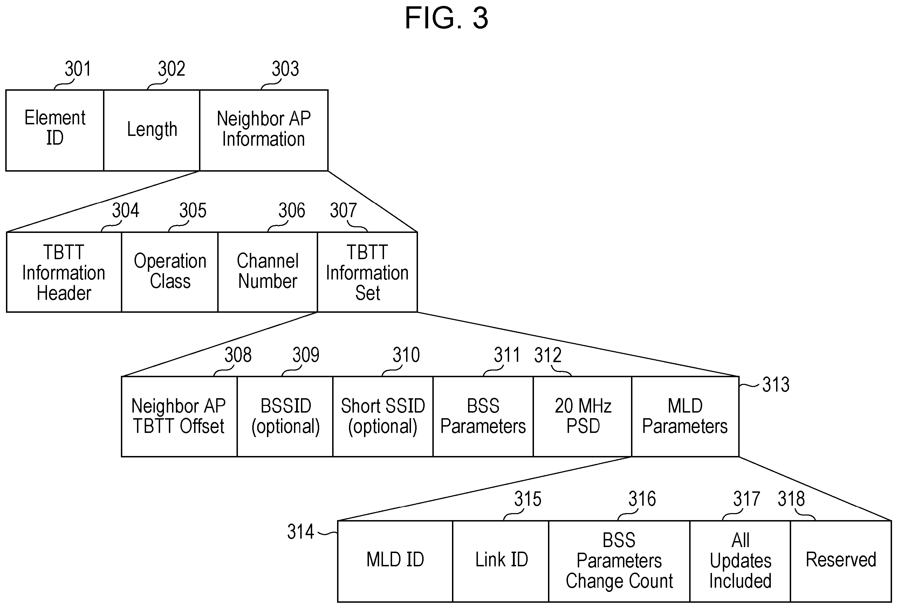

Fig. 3 illustrates an example of the RNR element. The RNR element may include Element ID 301, Length 302, and Neighbor AP Information 303. The Element ID 301 indicates the type of the corresponding element. For example, in the case of the RNR element, "201" may be stored in the Element ID 301. The Length 302 indicates the length of the corresponding element. The Neighbor AP Information 303 of a number corresponding to the number of the Aps to be reported may be arranged. Each piece of the Neighbor AP Information 303 may include TBTT Information Header 304, Operation Class 305, and Channel Number 306. In addition, each piece of the Neighbor AP Information 303 may include TBTT Information Set 307. The TBTT Information Header 304 is header information indicating the length and so on of each piece of TBTT Information included in the TBTT Information Set 307. The Operation Class 305 is used with the Channel Number 306 and indicates the beginning frequency of a primary channel used of the AP associated with the Neighbor AP Information 303 (the AP to be reported). The TBTT Information Set 307 may include Neighbor AP TBTT Offset 308, BSSID 309, Short SSID 310, BSS Parameters 311, and 20 MHz PSD 312. The TBTT Information Set 307 may include MLD Parameters 313. The Neighbor AP TBTT Offset 308 indicates information concerning the timing of the Beacon transmitted by the AP to be reported. The BSSID 309 indicates the identifier of a network composed by the AP to be reported. The Short SSID 310 indicates a value resulting from application of a Service Set Identifier (SSID) to a certain calculation formula. The BSS Parameters 311 indicate parameters of the network composed by the AP to be reported. The MLD Parameters 313 may include MLD ID 314, Link ID 315, BSS Parameters Change Count 316, All Updates Included 317, and Reserved 318. The MLD ID 314 indicates the identifier of the AP MLD to which the AP to be reported belongs. When the AP to be reported belongs to the same AP MLD as that of the AP transmitting the RNR element, the MLD ID 314 may have a value of zero. The Link ID 315 indicates a link identifier of the AP to be reported. The BSS Parameters Change Count 316 indicates the time period before change of the parameters of the network is performed at the AP to be reported. The All Updates Included 317 is set to one if all the elements updated in the latest parameter update are included. The Reserved 318 is a reserved field.

### Configuration of communication apparatus

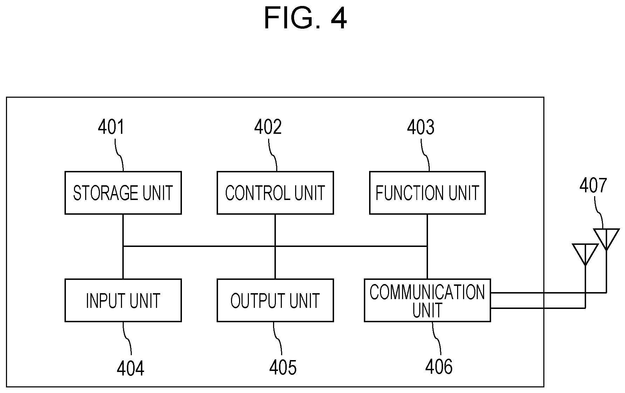

Fig. 4 illustrates an example of the hardware configuration of each communication apparatus in the present embodiment. Each communication apparatus includes a storage unit 401, a control unit 402, a function unit 403, an input unit 404, an output unit 405, a communication unit 406, and an antenna 407. Multiple antennas may be provided.

The storage unit 401 is composed of one or more memories, such as a read only memory (ROM) and a random access memory (RAM), and stores computer programs for various operations described below and a variety of information including communication parameters for the wireless communication. In addition to the memories, such as the ROM or the RAM, a storage medium, such as a flexible disk, a hard disk, an optical disk, a magneto-optical disk, a compact disk read only memory (CD-ROM), a compact disk recordable (CD-R), a magnetic tape, a non-volatile memory card, or a digital versatile disc (DVD), may be used as the storage unit 401. The storage unit 401 may include multiple memories and so on.

The control unit 402 is composed of one or more processors, such as a central processing unit (CPU) and a micro processing unit (MPU), and executes the computer programs stored in the storage unit 401 to control the entire AP 101. The control unit 402 may control the entire AP 101 in corporation between the computer programs stored in the storage unit 401 and an operating system (OS). The control unit 402 generates data and a signal (a wireless frame) to be transmitted in communication with another communication apparatus. The control unit 402 may include multiple processors including a multicore and may control the entire STA 102 with the multiple processors. The control unit 402 controls the function unit 403 to perform certain processes including the wireless communication, imaging, printing, and projection. The function unit 403 is hardware used by each communication apparatus to perform the certain processes.

The input unit 404 accepts various operations from a user. The output unit 405 performs various outputs to the user with a monitor screen and/or a speaker. The output from the output unit 405 may be display on the monitor screen, audio output from the speaker, vibration output, and so on. Both the input unit 404 and the output unit 405 may be realized by one module, like a touch panel. The input unit 404 and the output unit 405 may be integrated with the STA 102 or may be separated from the STA 102.

The communication unit 406 control the wireless communication conforming to the IEEE 802.11be standard. The communication unit 406 may control the wireless communication conforming to another standard of the IEEE 802.11 series standards, in addition to the IEEE 802.11be standard, or may control the wired communication, such as the wired LAN. The communication unit 406 controls the antenna 407 to transmit and receive signals for the wireless communication, which is generated by the control unit 402. When each communication apparatus supports the NFC standard, the Bluetooth standard, and the like, in addition to the IEEE 802.11be standard, the communication unit 406 may control the wireless communication conforming to these communication standards. When each communication apparatus is capable of performing the wireless communication conforming to the multiple communication standards, a configuration may be adopted in which the communication units and the antennas supporting the respective communication standards are individually provided. Each communication apparatus performs the communication of data, such as image data, document data, and/or video data, via the communication unit 406. The antenna 407 may be composed separately from the communication unit 406 or may be composed of one module with the communication unit 406.

The antenna 407 is an antenna capable of communication in the 2.4-GHz band, the 5-GHz band, and the 6-GHz band. Although each communication apparatus includes the two antennas in the present embodiment, each communication apparatus may include three antennas. Alternatively, each communication apparatus may include different antennas for different frequency bands. When each communication apparatus includes the multiple antennas, each communication apparatus may include the communication units 406 corresponding to the respective antennas.

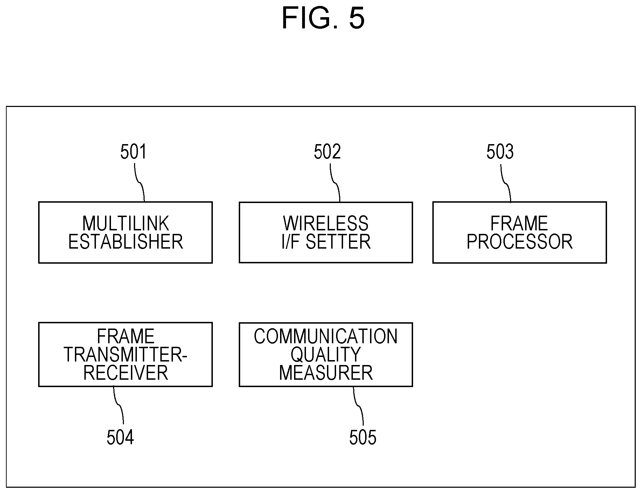

Fig. 5 is a block diagram illustrating the functional configuration of each communication apparatus in the present embodiment. Each communication apparatus may include a multilink establisher 501, a wireless I/F setter 502, a frame processor 503, a frame transmitter-receiver 504, and a communication quality measurer 505.

The multilink establisher 501 controls a communication starting process for establishing one or more links used by the communication apparatus to perform the wireless communication with a target communication apparatus, a control process of functions concerning the multi-link, an addition-deletion process of the links after the communication is started, and a communication termination process to delete all the links. For example, a connection process may be composed of Authentication, Association, and 4-Way-Hand-Shake (4WHS).

The wireless I/F setter 502 makes a communication setting of each link. For example, the wireless I/F setter 502 in the STA 102 performs selection and determination of the A-AP to which each A-STA is connected, setting of the frequency channel used by each A-STA, and so on. The wireless I/F setter 502 in the AP 101 sets information about the A-STA to which each A-AP is connected. In addition, the wireless I/F setter 502 in the AP 101 indicates information about the A-AP or the A-STA with which the link is established to the frame processor 503 and the frame transmitter-receiver 504.

The frame processor 503 generates a frame to be transmitted in accordance with the settings in the wireless I/F setter 502. For example, the frame processor 503 in the AP 101 generates the Beacon, the Probe Response, and so on including the Basic Multi-Link element or the RNR element. The frame processor 503 in the AP 101 generates the Authentication Frame, the Association Response, an Enhanced Multi-Link (EML) Operating Mode Notification frame, and so on. The frame processor 503 in the STA 102 generates the Probe request, the Association Request, and so on including the Basic Multi-Link element or the RNR element. The frame processor 503 in the STA 102 generates the EML Operating Mode Notification frame. In addition, the frame processor 503 processes the frame received from the target communication apparatus to acquire information. For example, the frame processor 503 in the STA 102 acquires information indicating that the AP 101 is capable of performing the multi-link communication and Enhanced Multi-link Single-Radio (EMLSR) from the Basic Multi-Link element or the RNR element included in the received Beacon and so on. The frame processor 503 in the STA 102 acquires the numbers of the apparatuses on the frequency channels used in the multi-link communication and so on.

The frame transmitter-receiver 504 transmits the wireless frame including the Beacon frame, the Probe Response frame, and a data frame, which are generated in the frame processor 503, and receives the wireless frame from the target communication apparatus in accordance with instructions from the wireless I/F setter 502.

The communication quality measurer 505 measures and calculates the communication quality of the Beacon/Probe Response frame received from the frame transmitter-receiver 504. Although Modulation and Coding Scheme (MCS), Receive Signal Strength Indicator (RSSI), Signal-to-Noise ratio (SNR), and so on are exemplified as communication quality information, the communication quality information is not limited to these. Here, the MCS is information resulting from indexing of a combination of the wireless modulation method, the code rate, and so on. The RSSI is information indicating the reception strength of the signal. The SNR is information indicating the ratio between the reception strength of the signal in the communication and the reception strength of a different signal, which is noise. For example, the value of the MCS is varied depending on the communication environment and the throughput is minimized when the MCS is equal to MCS0.

### Processing flow

The flow of the processing performed by the STA 102 described above, sequences in the wireless communication system, and so on will now be described using several examples.

### First example

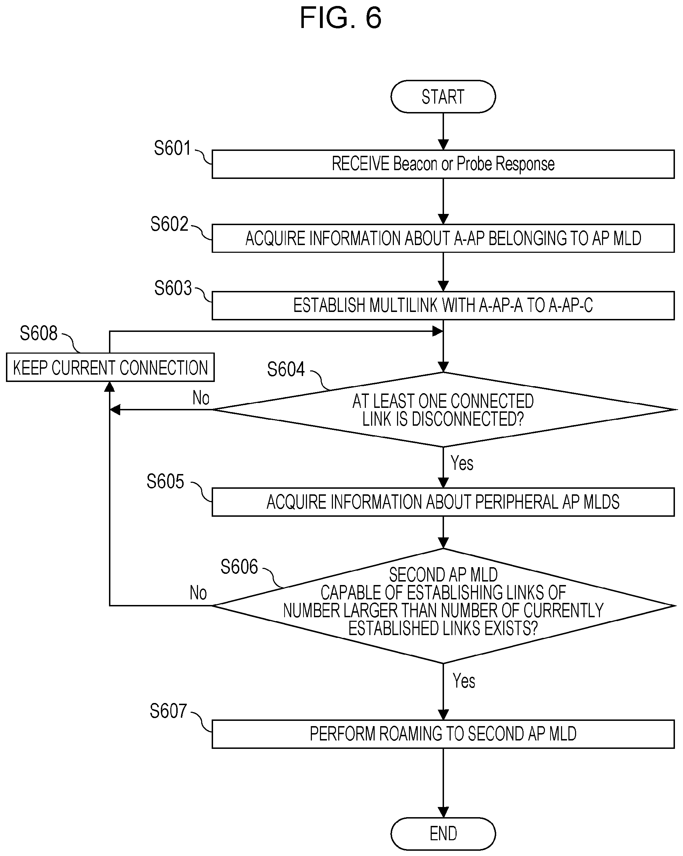

Fig. 6 is a flowchart illustrating an example of a process to start roaming to another AP MLD based on determination of disconnection of any link, among the multiple links established between the STA 102 and the AP 101. This process may be started, for example, when the STA 102 is attempts to connect to the AP 101.

In Step S601, the STA 102 receives the Beacon or the Probe Response via any A-STA. At this time, the STA 102 confirms whether the Basic Multi-Link element is included in the received Beacon or Probe Response to confirm whether the AP 101 is the AP MLD. In Step S602, the STA 102 acquires information about the frequency band, the frequency channel, and so on of each A-AP belonging to the AP 101, which is the AP MLD, based on the Basic Multi-Link element or the RNR element. For example, when the STA 102 receives the Beacon transmitted from the A-AP-A 201 via the A-STA-A 204, the STA 102 may acquire information about the A-AP-B 202 and the A-AP-C 203 from the Basic Multi-Link element or the like. The STA 102 may measure the communication quality with the A-AP-B 202 and the A-AP-C 203 using the RSSI or the like in the received Beacon or the like. In Step S603, the STA 102 establishes the multi-link with the AP 101.

After establishing the multi-link with the AP 101, in Step S604, the STA 102 determines whether any link in the multi-link is disconnected. The STA 102 determines that the link is disconnected based on, for example, reception of a Link Reconfiguration Notify frame having a value of three in a Reconfiguration Operation type of STA Control of a Per-STA Profile sub-element of Link Info of a Reconfiguration Multi-Link element from the AP 101 or non-acquisition of the Beacon frame transmitted via the A-AP of any link.

If the STA 102 determines that the link is disconnected (Yes in Step S604), in Step S605, the STA 102 acquires information about connectable AP MLDs around the STA 102. For example, the STA 102 acquires the information about the peripheral AP MLDs by receiving the Beacon, the Probe Response, or the frame including the RNR element described above on the available frequency channel. If the STA 102 determines that the link is not disconnected (No in Step S604), in Step S608, the STA 102 keeps the current connection with the AP 101.

After acquiring the information about the peripheral AP MLDs, in Step S606, the STA 102 determines whether the peripheral AP MLD capable of establishing the links of a number larger than the total number of the currently established links with the AP 101 exists. If the STA 102 determines that the peripheral AP MLD capable of establishing the links of a number larger than the number of the currently established links with the AP 101 exists (Yes in Step S606), in Step S607, the STA 102 performs the roaming to the corresponding AP MLD. If the STA 102 determines that the peripheral AP MLD capable of establishing the links of a number larger than the number of the currently established links with the AP 101 does not exist (No in Step S606), in Step S608, the STA 102 keeps the current connection with the AP 101. If the multiple peripheral AP MLDs capable of establishing the links of numbers larger than the number of the currently established links with the AP 101 exist, the STA 102 may perform the roaming to the AP MLD capable of establishing the links of a largest number.

When the STA 102 establishes the multi-link with the AP 101 in the above manner, the amount of calculation in the determination of whether the roaming is performed is capable of being decreased by using the disconnection of any link in the multi-link as a trigger of the roaming. In addition, performing the roaming to an appropriate AP in the peripheral environment enables increase in the throughput and improvement in communication efficiency.

### Second example

In a second example, if any link in the multi-link with the AP 101 is disconnected, the STA 102 acquires the communication quality information about each A-AP of the AP 101 and each A-AP of the peripheral AP MLDs. The STA 102 determines whether the roaming is performed based on the acquired communication quality information.

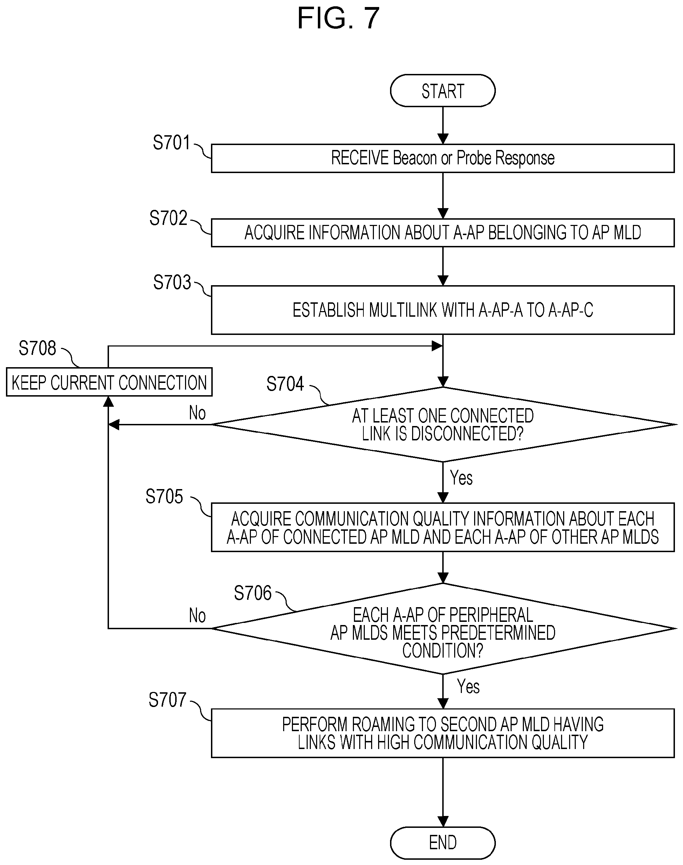

Fig. 7 is a flowchart illustrating an example of a process to determine whether the roaming is performed based on the communication quality information about each A-AP, which is performed by the STA 102 in the second example. Since Steps S701, S702, and S703 in Fig. 7 are the same as Steps S601, S602, and S603 in Fig. 6, a description of Steps S701, S702, and S703 is omitted herein.

After establishing the multi-link with the AP 101, if the STA 102 determines that any link in the multi-link is disconnected (Yes in Step S704), in Step S705, the STA 102 acquires the communication quality information about each A-AP of the AP 101 and each A-AP of the peripheral AP MLDs. For example, the STA 102 acquires the communication quality information about each A-AP based on the Beacon, the Probe Response, or the frame including the RNR element described above, which is received on the available frequency channel. If the STA 102 determines that any link in the multi-link is not disconnected (No in Step S704), in Step S708, the STA 102 keeps the current connection with the AP 101.

In Step S706, the STA 102 determines whether each A-AP of the peripheral AP MLDs meets a predetermined condition based on the acquired communication quality information. For example, the STA 102 may determine that each A-AP of the peripheral AP MLDs meets the predetermined condition if the communication quality information about each A-AP of the peripheral AP MLDs has a better value than the communication quality information about each A-AP of the AP 101. For example, the STA 102 may determine that each A-AP of the peripheral AP MLDs meets the predetermined condition if the MCS of each A-AP of the peripheral AP MLDs is better than MCS0.

If the STA 102 determines that each A-AP of the peripheral AP MLDs meets the predetermined condition (Yes in Step S706), in Step S707, the STA 102 performs the roaming to the corresponding AP MLD. If the STA 102 determines that each A-AP of the peripheral AP MLDs does not meet the predetermined condition (No in Step S706), in Step S708, the STA 102 keeps the current connection with the AP 101.

In the second example, the STA 102 acquires the communication quality information about each A-AP of the peripheral AP MLDs to determine whether the roaming is performed if any link is disconnected. If the communication quality information meets the predetermined condition, the STA 102 performs the roaming. As described above, in the second example, the determination of whether the roaming is performed based on the communication quality information about each A-AP of the peripheral AP MLDs enables reduction in the communication quality due to the roaming to an unintended AP to be prevented. Although the pieces of the communication quality information about the multiple A-Aps are compared in the second example, the comparison is not limited to this. For example, the comparison between only A-Aps having the highest communication quality may performed.

### Third example

In a third example, the STA 102 determines whether the roaming is performed based on settings in the STA 102 if any link in the multi-link with the AP 101 is disconnected.

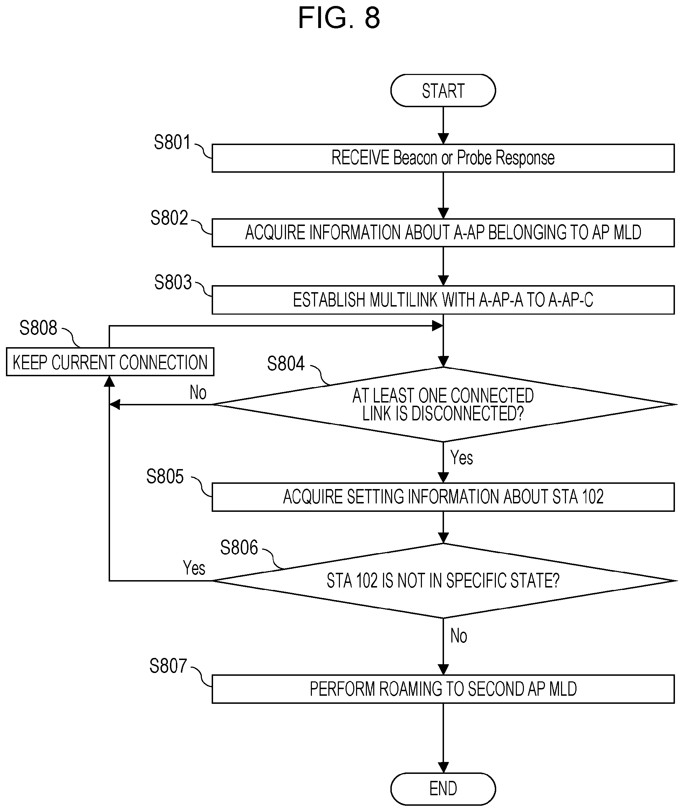

Fig. 8 is a flowchart illustrating an example of a process to determine whether the roaming is performed based on settings in the STA 102 if any link is disconnected, which is performed by the STA 102. Since Steps S801, S802, and S803 in Fig. 8 are the same as Steps S601, S602, and S603 in Fig. 6, a description of Steps S801, S802, and S803 is omitted herein.

After establishing the multi-link with the AP 101, if the STA 102 determines that any link in the multi-link is disconnected (Yes in Step S804), in Step S805, the STA 102 acquires setting information in the STA 102. In Step S806, the STA 102 determines whether the roaming is performed based on the acquired setting information. For example, the STA 102 determines that the roaming is not performed if the STA 102 determines that the STA 102 is operated in a power saving mode based on the acquired setting information. For example, the STA 102 determines that the roaming is not performed if the STA 102 determines that the STA 102 is battery-driven based on the acquired setting information. For example, the STA 102 determines that the roaming is not performed if the STA 102 determines that the STA 102 is performing Enhanced Multi-Link Multi-Radio (EMLMR) or the EMLSR based on the acquired setting information. As described above, the setting information is, for example, information indicating that the STA 102 is operated in the power saving mode. The setting information is, for example, information indicating that the STA 102 is battery-driven. The setting information is, for example, information indicating that the STA 102 is performing the EMLMR or the EMLSR.

As described above, in the third example, the STA 102 does not perform the roaming when the STA 102 is set so as not to intend to increase the number of the links. Accordingly, it is possible to prevent the performance of the roaming at a timing at which the performance of the roaming is not intended, for example, when the STA 102 is intended to save the power.

### Fourth example

Although the several examples are described above, the disclosure is not limited to the examples described above. In addition, some examples described above may be combined. In a fourth example, an example will be described in which the first example is combined with the second example.

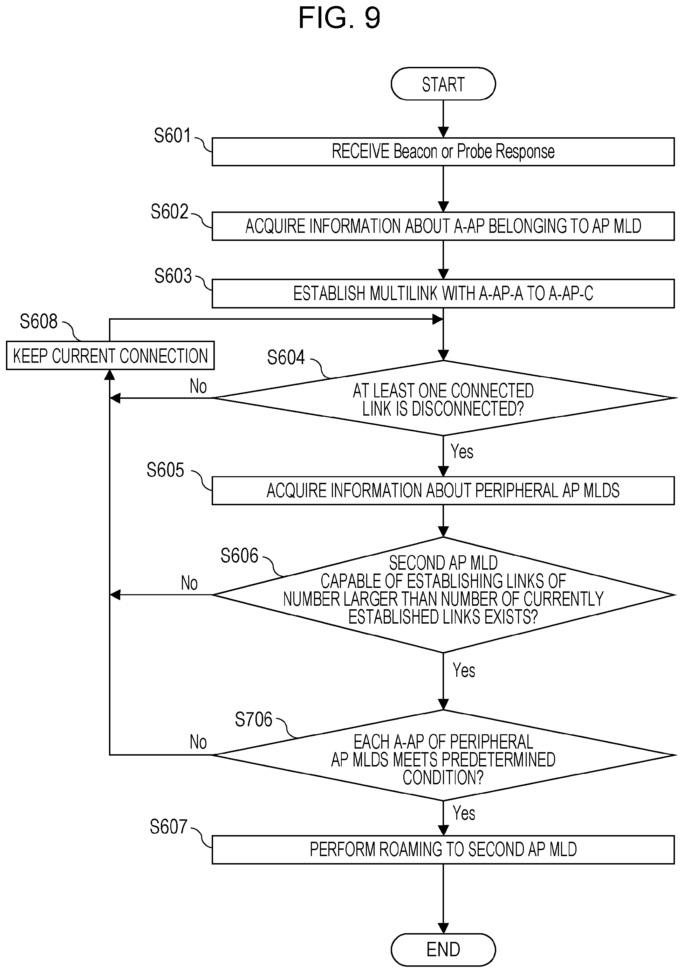

Fig. 9 is a flowchart illustrating an example of a process in the STA 102 when the first example is combined with the second example. Fig. 9 is a flowchart illustrating an example of a process when the STA 102 combines the determination based on the number of connectable links in the first example with the determination using the communication quality information in the second example to perform the roaming from the AP 101 to another AP MLD.

After establishing the multi-link with the AP 101, in Step S604, the STA 102 determines whether any link in the multi-link is disconnected. If the STA 102 determines that any link is disconnected (Yes in Step S604), in Step S605, the STA 102 acquires the information about the connectable AP MLDs around the STA 102. After acquiring the information about the peripheral AP MLDs, in Step S606, the STA 102 determines whether the peripheral AP MLD capable of establishing the links of a number larger than the total number of the currently established links with the AP 101 exists.

In Step S706, the STA 102 determines whether each A-AP of the peripheral AP MLDs meets a predetermined condition based on the information acquired in Step S605. If the STA 102 determines that each A-AP of the peripheral AP MLDs meets the predetermined condition (Yes in Step S706), in Step S607, the STA 102 performs the roaming to another AP MLD.

As described above, the communication qualities of the respective A-Aps are compared with each other while comparing the numbers of the connectable links in the respective AP MLDs with each other to determine whether the roaming is performed. Accordingly, it is possible to perform the roaming to another AP MLD after recognizing that the increase in the throughput and the improvement in the communication performance are enabled.

A recording medium storing program code of software realizing the above functions may be supplied to a system or an apparatus and the computer (the CPU or the MPU) of the system or the apparatus may read out the program code stored in the recording medium for execution. In this case, the program code read out from a storage medium realizes the functions of the above embodiments and the storage medium storing the program code composes the apparatus described above.

For example, a flexible disk, a hard disk, an optical disk, a magneto-optical disk, a CD-ROM, a CD-R, a magnetic tape, a non-volatile memory card, a ROM, a DVD, or the like may be used as the storage medium for supplying the program code.

In addition to the execution of the read-out program code by the computer to realize the above functions, the OS operating on the computer may perform part or all of the actual processes based on instructions in the program code to realize the above functions.

Furthermore, the program code read out from the storage medium is written on a memory in a function enhancement board loaded in the computer or a function enhancement unit connected to the computer.

The CPU in the function enhancement board or the function enhancement unit may perform part or all of the actual processes based on the instructions in the program code to realize the above functions.

The disclosure may be realized by a process in which a program realizing one or more functions of the above embodiments is supplied to a system or an apparatus via a network or a storage medium and one or more processors in the computer of the system or the apparatus reads out the program for execution. The disclosure may be realized by a circuit (for example, an application specific integrated circuit (ASIC) realizing one or more functions.

According to an embodiment of the disclosure, an efficient roaming mechanism in the MLD is provided.

### Other Embodiments

Embodiments of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiments and/or that includes one or more circuits (e.g., application specific integrated circuit (ASIC)) for performing the functions of one or more of the above-described embodiments, and by a method performed by the computer of the system or apparatus by, for example, reading out and executing the computer executable instructions from the storage medium to perform the functions of one or more of the above-described embodiments and/or controlling the one or more circuits to perform the functions of one or more of the above-described embodiments. The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A communication apparatus (102) conforming to Institute of Electrical and Electronics Engineers, IEEE, 802.11 series standards, the communication apparatus comprising:
establishing means (501) for establishing a plurality of links at least including a first link and a second link with a first other communication apparatus (101, 105);
acquiring means (402) for performing a process to acquire information about other peripheral communication apparatuses based on disconnection of any one link, among the plurality of links established with the first other communication apparatus (101); and
control means (402) for performing control so as to perform roaming to a second other communication apparatus (101, 105) based on the information acquired by the acquiring means (402).

2. The communication apparatus (102) according to claim 1, further comprising:
determining means (402) for determining whether the roaming to the second other communication apparatus (101, 105) is performed based on the information acquired by the acquiring means and a predetermined condition,
wherein the control means (402) performs control so as to perform the roaming to the second other communication apparatus (101, 105) based on the determination by the determining means that the roaming to the second other communication apparatus is performed.

3. The communication apparatus (102) according to claim 2,
wherein the predetermined condition is that the links of a number larger than the number of links established with the first other communication apparatus (101, 105) are capable of being established with the second other communication apparatus (101, 105), and
wherein the determining means determines that the roaming to the second other communication apparatus (101, 105) having connectable links of a number larger than the number of connectable links of the first other communication apparatus (101, 105) is performed.

4. The communication apparatus (102) according to any of claims 1 to 3,
wherein the information concerns the numbers of links establishable with the other peripheral communication apparatuses.

5. The communication apparatus (102) according to any of claims 1 to 4,
wherein, in a case where another communication apparatus (101, 105) having establishable links of a number larger than the number of links established with the first other communication apparatus (101, 105) does not exist, the control means performs control so as not to disconnect the connection with the first other communication apparatus (101, 105).

6. The communication apparatus (102) according to claim 2,
wherein the predetermined condition is that communication quality of the links establishable with the second other communication apparatus (101, 105) is higher than the communication quality of each link established with the first other communication apparatus.

7. The communication apparatus (102) according to any of claims 1 to 6,
wherein the information concerns communication quality of the links establishable with the other peripheral communication apparatuses.

8. The communication apparatus (102) according to any of claims 1 to 7,
wherein, in a case where another communication apparatus (101, 105) having communication quality of establishable links, which is higher than the communication quality of the links established with the first other communication apparatus (101, 105), does not exist, the control means performs control so as not to disconnect the connection with the first other communication apparatus.

9. The communication apparatus (102) according to any of claims 1 to 8, further comprising:
deciding means (402) for deciding that the link with an Affiliated access point is disconnected based on a certain Link Reconfiguration Notify frame received from the Affiliated access point belonging to the first other communication apparatus.

10. The communication apparatus (102) according to any of claims 1 to 9, further comprising:
deciding means (402) for deciding that the link with an Affiliated access point is disconnected based on non-reception of a Beacon frame transmitted from the Affiliated access point belonging to the first other communication apparatus.

11. The communication apparatus (102) according to any of claims 1 to 10,
wherein the control means (402) performs control so as not to perform the roaming to the second other communication apparatus in a case where the communication apparatus is in a predetermined state when any one link, among the plurality of links established with the first other communication apparatus, is disconnected.

12. The communication apparatus (102) according to claim 11,
wherein the predetermined state is a state in which Enhanced Multi-link Single-Radio, EMLSR, or Enhanced Multi-Link Multi-Radio, EMLMR, is performed with the plurality of links established with the other communication apparatuses.

13. The communication apparatus (102) according to claim 11,
wherein the predetermined state is a state in which the communication apparatus is operated in a power saving mode.

14. A control method of a communication apparatus (102) conforming to Institute of Electrical and Electronics Engineers, IEEE, 802.11 series standards, the control method comprising:
establishing (S603) a plurality of links at least including a first link and a second link with a first other communication apparatus (101, 105);
performing (S605) a process to acquire information about other peripheral communication apparatuses based on disconnection of any one link, among the plurality of links established with the first other communication apparatus (101, 105); and
performing (S607) control so as to perform roaming to a second other communication apparatus (101, 105) based on the acquired information.

15. A computer program comprising instructions which, when the program is executed by a computer, cause the computer to carry out the method of claim 14.
